# NEUE EUROPÄISCHE PATENTSCHRIFT

(11) **EP 1 150 039 B3**
(45) Veröffentlichungstag und Bekanntmachung des Hinweises auf die Entscheidung über den Einspruch: **14.11.2007**
(45) Hinweis auf die Patenterteilung: 12.11.2003
(21) Anmeldenummer: 01105573.8
(22) Anmeldetag: 06.03.2001
(51) Int. Cl.: F16H 57/02

(54) **Vorrichtung zur verdrehbaren Kopplung zweier koaxialer Anschlusselemente**
Device for a turnable coupling of two co-axial connecting terminals
Dispositif pour un accouplement rotatif de deux raccordements coaxiaux

(30) Priorität: 28.03.2000 DE 10015093
(43) Veröffentlichungstag der Anmeldung: 31.10.2001
(73) Patentinhaber: IMO Antriebseinheit Holding GmbH, 91350 Gremsdorf (DE)
(72) Erfinder: Russ, Erich, 91350 Gremsdorf (DE); Schröppel, Werner, Dipl.-Ing., 90530 Wendelstein (DE)
(74) Vertreter: Küchler, Stefan

(56) Entgegenhaltungen:
- EP-A- 0 030 877
- EP-A- 0 631 068
- WO-A-99/24730
- FR-A- 574 594
- FR-A- 2 137 171
- US-A- 3 575 060
- Rollix-Katalog "COURONNES D'ORIENTATION"
- Internes Dokument der DEFONTAINE-Gruppe
- Seiten 108 bis 112 aus dem Französischen Telefonbuch
- Teile aus dem STABAU Katalog "Programmübersicht und Preisliste 5/'96"
- STABAU Katalog "Drehgerät"
- STABAU Zeichnung A. 2775 "Drehgerät"
- Zeichnung ROLLIX PR-RD-931B und eine Kopie einer hiermit zusammenhängenden Erklärung von Herrn TERVE vorgelegt in einem Einspruchsverfahren betreffend DE10015093B4, entsprechend dem Patent wogegen Einspruch erhoben wird.
- Katalog der Firma HOESCH ROTHE ERDE
- Seiten 1 und 2 einer Internetsite der Firma GEAR PRODUCTS INC.
- Brief des Vertreters des Inhabers des Patents wogegen vor dem EPA Einspruch erhoben wird
- Die erste Seite der Internetsite "gearproducts.com/rotator", Stand von 11/08/1999, betreffend Model 170-00001-1 (vorher D11).
- Eine Kopie der Zeichnung GEAR PRODUCTS 170-00001-1.
- Seiten 1 und 2 von D14-1, Stand 01/02/06.
- Erklärung des Herrn TERVE betreffend die 3 vorgehenden Dokumente und D8.
- Erklärung des Herrn TERVE betreffend D7 und D8.
- Zwei Seiten einer Internetsite zur Bestätigung des Datums der HANNOVER MESSE von März 2000.
- Deckblätter und zwei Seiten, 3761 und 3762, der Grand Dictionnaire
- Deckblätter und Seiten 1 bis 28 der Katalog Nr. 390 von 1986, der Firma KAYDON CORPORATION.
- Kopie der Daten betreffend D1 vom Europäisches Patentregister.
- Kopien der Seiten 2, 6, 7 und 13 eines Prospekts, erhalten am 28-10-1996.
- Kopie eines anderen Prospekts von 16 Seiten

## Beschreibung

Die Erfindung richtet sich auf eine Vorrichtung zur verdrehbaren Kopplung zweier koaxialer Anschlußelemente, umfassend eine als ein- oder mehrreihiges Wälzlager ausgebildete Drehlagerung zwischen den Anschlußelementen zur Aufnahme von Axial- und Radiallasten und Kippmomenten sowie einen mit beiden Anschlußelementen zu deren Relatiwerdrehung gekoppelten Antrieb, dessen Chassis an einem ersten Anschlußelement festgelegt ist, während sein Rotor mit einem Rilzel oder einer Schnecke verbunden ist, welche (s) mit einer mantelseitigen Verzahnung des zweiten Anschlußelements kämmt, wobei in oder an einer Stirnseite des verzahnten Anschlußelements kranzförmig angeordnete Befestigungsmittel für die Festlegung dieses Anschlußelements an einem ersten Anlagenteil vorgesehen sind, welche sich zwischen der Verzahnung und der Drehlagerung befinden.

Derartige Drehverbindungen sind als sog. Kugel-Drehverbindungen im Handel erhältlich. Sie werden in verschiedenen Durchmessern und Bauhöhen angeboten, so dass für jeden Anwendungsfall die richtige Drehverbindung ausgewählt werden kann. Bevorzugt Einsatzgebiete umfassen Baumaschinen, bspw. Bagger, sowie Kräne, Blattflanschlager und Turmhauslager großer Windenergieanlagen, Förder-, Hebe- und Umschlageinrichtungen, Hubarbeitsbühnen und Fahrzeugkräne, Schwerlasttransportfahrzeuge, Schiffskräne, Drehtische von Werkzeugmaschinen, Drehkarussells bspw von Getränkeabfüllanlagen, medizinische Apparate, Oberwagendrehkränze von Holzemtemaschinen, Fahrgeschäfte von Vergnügungsparks, etc. Für viele, derartige Anwendungsfälle ist es wichtig, dass die Bauhöhe der Drehverbindung möglichst gering ist, weshalb die Bauhöhe derartiger Kugeidrehverbindungen in der Praxis oft kaum größer ist als die Höhe der Verzahnung des von einem Motor angetriebenen Anschlußteils der Drehverbindung. Während die Wälzlagerlaufbahnen zumeist durch Gummidichtungen vor Verschmutzung und dadurch erhöhter Abnützung geschützt sind, so sind entsprechende Vorsichtsmaßnahmen bei der Verzahnung nicht getroffen, wodurch hier bei rauhem Betrieb bspw. auf Baustellen etc. Fremdkörper eindringen können, welche sodann in den Raum zwischen der Verzahnung und dem damit kämmenden Getriebeelement, bspw. Ritzel oder Schnecke, geraten und dort entweder zermahlen werden oder eine Beschädigung der Zahnflanken her vorrufen. Letztere Gefahr geht insbesondere von harten Werkstoffen wie Gestein oder von in Bearbeitungsmaschinen anfallenden, harten Metallspänen aus. Durch in den Bereich der Verzahnung vordringende Schmutzpartikel wird außerdem das Schmierfett schnell verunreinigt und muß daher in kurzen Zeitintervallen ersetzt werden. Schließlich geht von der ungeschützten Verzahnung eine Verletzungsgefahrbspw.für das Wartungspersonal aus.

Die WO99/24730 wird als gattungsbildender Stand der Technik gegenüber dem Gegenstand des anspruchs 1 augesehen.

Aus den Nachteilen das beschriebenen Stands der Technik resultiert das die Erfindung initiierende Problem, eine gattungsgemäße Drehverbindung derart weiterzubilden, dass sie Kompakter ausgebildet ist, wobei gleichzeitig eine Beschädigung des Verzahnungsbereichs durch eindringende Fremdkörper möglichst ausgeschlossen ist, die Schmierintervalle des Verzahnungsbereichs möglichst lange sind, und die Verletzungsgefahr so weit als möglich gemindert ist.

Die Lösung dieses Problems gelingt mit einer Vorrichtung gemäß Anspruch 1.

Diese weist ein wenigstens die Verzahnung des zweiten Anschlußelements umschließendes Gehäuseteil auf, welches an dem unverzahnten Anschlußelement festgelegtistund das verzahnte Anschl ußelementan der seinen Anuhluß-Befestigungsmittain gegenüberliegenden Stirnseite umgreift, wobei die Befestigungsmittel für die Festlegung des unverzahnten Anschlußelements an einem zweiten Anlagenteil direkt an dem unverzahnten Anschlußelement angeordnet sind, so dass das erfindungsgemäße Gehäuseteil weitgehend kräftefrei ist.

Die Erfindung macht sich die Talsache zunutze, dass die beiden, koaxial ineinander angeordneten Anschlußelemente üblicherweise um ein geringes Maß In axialer Richtung gegeneinander versetzt sind, wobei die jeweiligen Anschfußbohrungen vorzugsweise in derjenigen Stirnseite der Anschlußelemente angeordnet sind, welche in axialer Richtung von dem anderen Anschlußelement weg verschoben ist. Da andererseits das Gehäuse des Antriebsmatars mit dem unverzahnten Anschlußelement verbunden ist, welches deshalb zumeist an dem Chassis der betreffenden Maschine bzw. an dem feststehenden oder größeren Maschinenteil befestigt ist, nutzt die Erfindung die geometrischen Gegebenheiten auf vorteilhafte Weise, um das die Verzahnung schützende Gehäuse trotz der größeren Nähe zu dem verzahnten Anschlußteil an dem unverzahnten Anschlußteil festzulegen und somit das gesamte, rotierende Teil an drei Seiten seines Querschnittes zu umgeben und dadurch äußeren Einflüssen soweit als möglich zu entziehen. Von außen zugänglich verbleibt noch die mit den Bohrungen zum Anschluß eines verdrehbaren Teils versehene Stirnseite des verzahnten Anschlußelements, welche jedoch durch den Einbau ebenfalls abgedeckt wird. Das erfindungsgemäße Gehäuse schützt den Verzahnungsbereich vor eindringenden Schmutzpartikeln und erhöht somit dessen Betriebsdauer, gleichzeitig wird das Schmierfett vor Verunreinigungen bewahrt, so dass die Schmierintervalle verlängert werden können, und schließlich ist ein Berührungsschutz für das Wartungs- und Reparaturpersonal gegeben. Dies alles wird erreicht im Rahmen einer optimal ausgelegten Baugruppe, so dass dem Anwender die Fertigung eines eigenständigen Gehäuseteils erspart bleibt, so dass sich die Konstruktion größerer Anlagen stark vereinfacht. Indern die Befestigungsmittel des un verzahnten Anschlußteils direkt an demselben angeordnet sind, bleibt das Gehäuse von Drehmomenten und Kräften weitgehend frei und kann daher mit einem vergleichsweise schwachen Querschnitt ausgelegt sein. Dadurch läßtsich einerseits die Baugröße, insbesondere Jindem höhe minimieren und andererseits Gewicht sparen.

Indem die Verzahnung und die Führungsbahn für das Wälzlager des zweiten Anschlußelements durch vorzugsweise spanabhebende Bearbeitung, aber auch durch eine gemeinsame Formgebung, bspw. durch Sintern, desselben Anschlußelement-Grundkörpers hergestellt ist wird einerseits das Merstellungsverfahren vereinfacht, da das gesamte, verzahnte Anschlußelement einteilig hergestellt werden kann, außerdem erhöht sich die Stabilität desselben und damit die übertragbaren Axial- und Radialkräfte wie auch Klpp- und Antriebsmomente. Darüber hinaus können auch die Befestigungsbohrungen des zweiten Anschlußelements durch spanabhebende Bearbeitung aus dem Anschlußelement-Grundkörper hergestellt werden. Daneben besteht natürlich auch die Möglichkeit, dass die Verzahnung an einem getrennt hergestellten Bauteil angeordnet sein könnte, das sodann mit dem betreffenden Anschlußelement in einem zweiten Verfahrensschritt verbunden werden müßte, bspw. durch Aufpressen, Anschrauben, etc.

Es liegt im Rahmen der Erfindung, dass ein oder beide Anschlußelemente als konzentrische Ringe oder Scheiben ausgebildet sind mit kranzförmig angeordneten Befestigungsmitteln, insbesondere Bohrungen. Infolge der hohen, zu übertragenden Kräfte und Momente ist eine große Anzahl von Wälzelementen erforderlich, welche einen entsprechenden Durchmesser der Drehlagerung bedingen. Zur Materialersparnis kann daherbei einem oder beiden Elementen eine zentrale Ausnehmung vorgesehen sein, durch welche außerdem unverdrehbare Teile, Versorgungsleitungen od. dgl. hindurchgeführt sein können.

Die Befestigungsbohrungen können als durchgehende Ausnehmungen ausgeführt sein mit oder ahne Innengewinde, oder als Sacklochbohrungen mit Innengewinde. Bei dem von dem efindungsgemäßen Gehäuseteil stirnseitig umgriffenen, verzahnten Anschlußelement empfiehlt die Erfindung die Verwendung von Bohrungen mit Innengewinde, da die der Anschlußfläche gegenüberliegende Stirnseite nicht zugänglich ist.

Dieser Erfindungsgedanke lässt sich dahingehend weiterbilden, dass das verzahnte Anschlußelement als außen verzahnter Kranz ausgebildet ist. Bei dieser Ausführungsform mit mantelseitigen Zähnen des Anschlußelements kann unabhängig von der Winkelstellung des verzahnten Anschlußelements stets ein maximales Antriebsmoment übertragen werden, so dass ggf. die Bauhöhe auf ein Minimum reduziert werden kann.

Eine weitere Reduzierung der Bauhöhe läset sich dadurch erreichen, dass die Wälzkörper-Führungsbahn des verzahnten Anschlußelements an dessen selner Verzahnung gegenüberliegenden Mantelfläche angeordnet ist. Hier steht dem Wälzlager nahezu die gesamte durch die Höhe des verzahnten Bereichs vorgegebene Höhe dieses Anschlußelements zur Verfügung,

Indem der radiale Abstand der Befestigungsbohrungen des verzahnten Anschlußelements zu dem Grund der Wälzkörper-Führungsbahn des verzahnten Anschlußelements etwa dem radialen Abstand dieser Bohrungen von dem Grund der Verzahnung entspricht, kann eine übermäßige, lokale Schwächung des verzahnten Anschlußelements vermieden werden.

Dem seiben Ziel dient eine weitere Konstruktionsvorschrift, wonach die Befestigungsbohrungen des verzahnten Anschlußelements als ausschließlich zu dessen Anschluß-Stirnseite hin offene Sacklochbohrungen ausgebildet sind, deren achsparallele Tiefe zwischen dem ½-fachen und dem ¾-fachen der Bauhöhe des verzahnten Anschlußelements liegt. Dieses Merkmal erlaubt eine Weiterbildung dahingehend, dass der Boden der Befestigungsbohrungen des verzahnten Anschlußelements sich etwa auf Höhe der stärksten Einwölbung bzw. Verjüngung das verzahnten Anschlußelements infolge der eingearbeiteten Führungsbahn für das Wälzlager befindet, Dadurch hält die Wälzlagerführungsbahn einen maximalen Abstand zu den Befestigungsbohrungen ein, so dass die Radiaterstrerckung des verzahnten Anschlußelements und damit dessen Gewicht auf ein Minimum reduziert werden kann, ohne dass dieses Anschlußelement dadurch der Gefahr einer Verformung unter Einwirkung erhöhter Radialkräfte ausgesetzt wäre.

Ein weiteres, vorteilhaftes Merkmal der Erfindung liegt darin, dass das an dem unverzahnten Anschlußelement festgelegte Gehauseteil sich in Form eines Kreisrings entlang einer Stirnseite des verzahnten Anschlußelements parallel zu diesem erstreckt. Die Abmessungen des kreisringförmigen Gehäuseteils sind dabei weitgehend durch die Bemaßung der Anschlußelemente vorgegeben, so kann die radiale Erstreckung dieses Kreisrings bspw. nur etwas größer gewählt sein als das entsprechende Maß des verzahnten Anschlußelemente, damit dieses gerade eben umgriffen werden kann, und die Stärke dieses Gehäuseteils sollte möglichst gering sein, vorzugsweise gleich oder kleiner als der axiale Versatz zwischen den beiden Anschlußelementen, so dass das Gehäuseteil ahne Vergrößerung der Bauhöhe der Drehverbindung eingesetzt werden kann, je nach Ausführungsform radial außerhalb oder innerhalb des unverzahnten Anschlußelements. Dabei wird angestrebt, dass das unverzahnte Anschlußelement mit dem an diesem festgelegten Gehäuseteil stirnseitig bündig abschließt oder geringfügig erhaben gegenüber diesem ist. Bevorzugt entspricht solchenfalls die Bauhöhe der Drehverbindungsbaugruppe ggf. mit Ausnahme einer peripher angeordneten Antriebsbaugruppe dem Abstand zwischen den beiden Anschlußflächen der Anschlußelemente. Sofern aus anderweitigen Gründen die Bauhöhe der Drehverbindung von untergeordneter Bedeutung ist, kann dieser Kreisring auch an einer Stirnseite des unverzahnten Anschlußelements festgeschraubt oder anderweitig festgelegt, bspw. geschweißt, geklebt, gepreßt genietet, etc., sein, so dass sich eine geringe Vergrößerung der Bauhöhe ergibt. An der dem unverzahnten Anschlußelement gegenüberliegende Peripherie dieses kreisringförmigen Gehäuseteils schließt sich sodann ein etwa zylindermantelförmiges Gehäuseteil an, welches sich über die gesamte Verzahnung hinweg bis zu der gegenüberliegenden Stirnseite des verzahnten. Ansrhlußelements erstreckt. Dieses zylindermantelförmige Gehäuseteil ist mit dem kreisringförmigen Gehäuseteil verbunden, bspw. verschweißt, oder gar einstückig hergestellt.

Sofern - wie die Erfindung weiterhin vorsieht - das erfindungsgemäße Gehäuseteil lösbar an dem unverzahnten Anschlußelementfestgelegt ist, kann es zur Wartung der erfindungsgemäßen Drehverbindung abgenommen werden.

Die lösbare Verbindung kann mit sehr gerintgern Aufwand realisiert werden, Indem das Gehäuseteil an dem unverzahnten Anschlußelement festgeschraubt ist. Sofern die Stärke des Gehäuseteils dies zuläßt, kann in diesem eine abgestufte Ausnehmung vorgesehen sein, durch welche entsprechende Maschinenschrauben hindurchgreifen können, bis ihre Köpfe vollständig in den durch die Abstufung geschaffenen, radial erweiterten Bereich eintauchen, so dass durch eine derartige Schraubverbindung die Bauhöhe der Anordnung nicht weiter vergrößert wird.

Dadurch ist es möglich, als Maschinenschrauben ausgebildete Befestigungsschrauben in zu derDrehachse parallele Gewindebohrungen des unverzahnten Anschlußelements einzuschrauben. Die Anordnung kann dabei so getroffen sein, dass diese das Gehäuse mit dem unverzahnten Anschlußelement verbindenden Schrauben beim Einbau in eine Maschine von deren Chassis oder deren feststehenden Teil abgedeckt werden, so dass ein versehentliches Lösen des erfindungsgemäßen Gehäuseteils ausgeschlossen ist.

Die Efindung erlaubt eine Weiterbildung dahingehend, dass das Gehäuseteil an dem unverzahnten Anschlußelement mittels einer an dem Anschlußelement oder dem Gehäuseteil vorgesehenen Einkehlung zentriert ist. Hierdurch kann einerseits eine getrennte Justierung entfallen, außerdem ist eine ungewollte Verschiebung des Gehäuseteils gegenüber dem unverzahnten Anschlußelement völlig unmöglich, selbst wenn sich eine oder mehrere der Befestigungsschrauben lockern sollten.

Sofern die der Zentrierung dienende Einkehlung an der dem Gehäuseteil zugewandten Kante des unverzahnten Anschlußelements vorgesehen ist, kann der kreisringförmige Gehäuseteil darin eingelegt werden. Zu diesem Zweck sollte die Tiefe der Einkehlung etwas kleiner bemessen sein als der axiale Versatz des unverzahnten Anschlußelements gegenüber dem verzahnten, so dass der auf dem Boden der Einkehlung aufsitzende Kreisring nichtan demverzahnten Anschlußelementent lang streift.

Um den Gehäuse-Kreisring auch in axialer Richtung unverrückbar an dem unverzahnten Gehäuseteil festzulegen, müssen die Maschinenschrauben zumindest einen Teil des Kreisringes übergreifen, um dies mit ihrer Unterseite fest gegen den Boden der Einkehlung pressen zu können. Dies kann erfindungsgemäß dadurch erreicht werden, dass an der Außenseite des kreisringförmigen Gehäuseteils eine oder mehrere Einsenkungen vorgesehen sind, denen wenigstens je eine Maschinenschraube zwecks Befestigung an dem unverzahnten Anschlußelenentzugeordnet Ist. Diese Einsenkungen können von der Unterseite der Schraubenköpfe oder von durch diesen fixierten Körpern, z. B. Scheiben, hintergriffen und dadurch das betreffende Gehäuseteil fest gegen die Einkehlung des unverzahnten Anschlußelements gedrückt werden, während gleichzeitig die Köpfe der zur Befestigung verwendeten Maschinenschrauben in der betreffenden Einsenkung verschwinden.

Diese Ausführungsform Lässt sich dahingehend weiterbilden, dass die Einsenkungen des Gehäuse-Kreisringes sich bis zu der dem unverzahnten Anschlußelement zugewandten Mantelfläche des Gehäuseteils erstrecken und durch eine hinsichtlich Tiefe und Querschnitt entsprechende Einsenkung des unverzahnten Anschlußelements fortgesetzt werden. Dieses Erfindungsmerkmal verfolgt die Absicht, einen dem kreisringförmigen Gehäuseteil und dem unverzahnten Anschlußelement gemeinsamen Vertiefungsraum zu bilden, so dass der Kopf der Befestigungsschraube oder ein von dieser hintergriffenes Befestigungselement die Fügestelle zwischen dem unverzahnten Anschlußelement und dem daran festzulegenden Gehäuseteil übergreifend in die gemeinsame Ausnehmung eingesetzt werden kann. Mit einer derartigen Anordnung lässt sich auf einfachem Weg die Aufgabe realisieren, die Befestigungsschraube in das unverzahnte Anschlußelement einzuschrauben und gleichzeitig das weitgehend seitlich außerhalb desselben befindliche Gehäuseteil zu übergreifen und zu fixieren.

Der erste Teil dieser kombinierten Aufgabenstellung wird dadurch gemeistert, dass in dem Boden der Einsenkungen in dem unverzahnten Anschlußelement wenigstens je eine zur Drehachse parallele Gewindebohrung für je eine Maschinenschraube vorgesehen ist. Obwohl sich das zu befestigende Gehäuseteil weitgehend außerhalb des unverzahnten Anschlußelements befindet, gelingt es mit der erfindungsgemäßen Kanstruktion, zur Drehachse der Anordnung parallele Befestigungsbohrungen vorzusehen, so dass die maschinelle Herstellung und insbesondere das automatische Festziehen der Befestigungsschrauben weiter gefördert wird.

Zur Lösung des zweiten Teils der kombinierten Aufgabenstellung sieht die Erfindung in je zwei miteinander korrespondierende Einsenkungen des unverzahnten Anschlußelements und des daran festzulegenden Gehäuseteils passend einlegbare Körper mit Bohrungen zum Hindurchstecken der Befestigungsschrauben vor. Diese Körper können die axialen Anpreßkräfte von den Befestigungsschrauben auf das kreisringförmige Gehäuseteil übertragen.

Sofern die Durchstecköffnungen der Einlogkör per oberseitige Erwelterungen zum Versenken der Befestigungsschauben aufweisen, können die Bafestigungsachrauben trotz Verwendung zusätzlicher Einlegekörper vollständig integriert wenden, so dass die Bauhöhe der Drehverbindung minimal bleibt. Um ein vollständiges Versenken der Schraubenköpfe zu ermöglichen, muss die Höhe der Einlegekörper und damit auch die Tiefe der Einsenkungen größer als die Höhe eines Schraubenkopfs bemessen sein.

Das kreisringförmige Gehäuseteil sollte derart bemessen sein, dass dieses sich entlang der Stirnseite des verzahnten Anschlußelements und der daran angeordneten Verzahnung bzw. bis über letztete erstreckt. An seiner Peripherie setzt sich dieses Gehäuseteil sodann durch ein zylindermantelförmiges Gehäuseteil fort, das vorzugsweise angeschweißt ist, aber auch angeklebt, angeschraubt oder auf sonstigem Wege festgelegt oder einteilig mit ersterem hergestellt sein kann. Dieses zylindermantelförmige Gehäuseteil deckt sodann die gesamte Verzahnung ab, so dass nur noch ein schmaler Spalt zwischen dem verzahnten Anschlußelement und dem diesen gegenüberliegenden, zylindermantelförmigen Gehäuseteil verbleibt. Damit auch an diesem verbleibenden Spalt keine Schmutz- oder sonstigen Partikel in den Bereich der Verzahnung gegangen können, so dass die Verzahnung staubdicht von dem Gehäuse umschlossen wird, sollte das sich über die Verzahnung erstreckende Gehäuseteil an seiner dem ersten, kreisringförmigen Gehäuseteil gegenüberliegenden Stirnseite gegenüber dem verzahnten Anschlußteil abgedichtet sein. Diese Abdichtung kann entweder an dem die Verzahnung bedeckenden Gehäuseteil oder an dem verzahnten Anschlußelement festgelegt sein und an dem jeweils anderen Element entlangstreifen. Damit dieses Abdichlungselement die Drehbewegung des verzahnten Anschlußelements nicht behindert, sollte die Verzahnung nicht vollständig bis zu dessen die Anschlußbohrungen aufweisender Stirnseite herausgezogen sein, sondern um ein etwa der Stärke des Dichtungsmaterials entsprechendes Maß in axialer Richtung gegenüber der Anschfußseite des verzahnten Anschlußelements zurückversetzt enden.

Um die potentiell schädlichen Auswirkungen eindringender Fremdkörper vollständig auszuschließen, ist eine zweite Abdichtung vorgesehen welche sich an der dem ersten Gehäuseteil gegenüberliegenden Seite der Führungsbahn für das/die Wälzlagerung(en) befindet. Somit wird das verzahnte Anschlußelement zwischen der Führungsbahn des unverzahnten Anschlußelements, den beiden Gehäuseteilen und den beiden Abdichtungen von drei Selten dicht urnschlossen, und im Normalbetrieb können keinerlel Schmutzpartikel weder in den Bereich des Wälzlagers noch in den Verzahnungsbereich gelangen, so dass der Verschleiß dieser Teile erheblich gemindertwird und damit die Betriebsdauer der erfindungsgemäßen Drehverbindung verlängert werden kann.

Es hat sich bewährt, dass die Abdichtungen als elastische Dichtringe ausgebildet sind, die mit einer Kante in oder an einem Anschlußelement festgelegt sind. bspw. durch Einlegen in eine rundumlaufende Nut und/ oder durch Festkleben, und gegen eine Oberfläche des jeweils anderen Anschlußelements gedrückt werden. Aufgrund der Rotationssymmetrie der bekien Anschlußelements wird bei einer Relatiwerdrehung derseiben die Dichtung überhaupt nicht verformt, sie verbleibt stets in derselben Position und zeigt daher kaum Ermüdungserscheinungen. Ferner sind die Andrückkräfte der Dichtungsringe sehr gering und erzeugen daher kaum Relbungskräfte, und da überdies die Drehzahlen derartiger Drehverbindungen meist relativ gering sind, zeigen die Dichtungsringe trotz des Entlangstreifens an einem bewegten Körper kaum Abrieberscheinungen.

Die Erfindung bietet ferner die Möglichkeit, dass das oder im Fall mehrerer Antriebsmotoren die mit dem verzahnten Anschlußelement kämmende(n) Getriebeefement(e), insbesondere Ritzel oder Schnecke (n), von einem ggf. radial erweiterten Teil des Gehäuses umschlossen ist (sind). Infolge des Verzahnungseingriffs des an den Rotor des Antriebsmotors gekoppelten Getriebeteils mit dem verzahnten Anschlußelement ist eine vollständige Kapselung desseiben nur möglich, wenn das betreffende Getriebeteil ebenfalls mit umschlossen wird. Die dadurch bedingte, radiale Erweiterung des Gehäuses bedingt lokale Verformungen der beiden Gehäuseteile gegenüber der ideal kreisringförmigen bzw. zylindermanlelförmigen Gestalt, was jedoch durch Einsatz moderner Fertigungsmethoden mit mäßigem Zusatzaufwand bewerkstelligt werden kann.

Schließlich entspricht es der Lehre der Erfindung, dass der Antriebsmotor an dem nicht verzahnten Anschlußelement und/oder an einem damit verbundenen Gehäuseteil fixiert, insbesondere angeschraubt ist. Da jedes von einem Antriebsmotor über ein Ritzel oder eine Schnecke abgegebene Drehmoment nach dem von Isaak Newton postulierten Axiom "actio = reactio" von einem das Motorgehäuse In entgegengesetzter Richtung zu drehen suchendes Moment begleitet ist, muss das Motorgehäuse an dem nicht angetriebenen Anschlußelement oder an einem daran gekoppelten Maschinenteil, insbesondere dem erfindungsgemäßen Gehäuse, festgelegt sein. Sofern der Motor hierbei mit Schrauben fixiert ist, kann er bei einem Defekt ggf. schnell ausgewechselt werden.

Weitere Merkmale. Einzelheiten. Vorteile und Wirkungen auf der Basis der Erfindung ergeben sich aus der nachfolgenden Beschreibung einiger bevorzugter Ausführungsbeispiele der Erfindung sowie anhand der Zeichnung. Hierbei zeigt:
- Fig. 1: eine erste Ausführungsform der Erfindung in ei- ner perspektivischen Ansicht;
- Fig. 2: einen Schnitt durch die Fig. 1 entlang der Linie II - II;
- Fig. 3: eine zweite Ausführungsform der Erfindung in der Draufsicht.

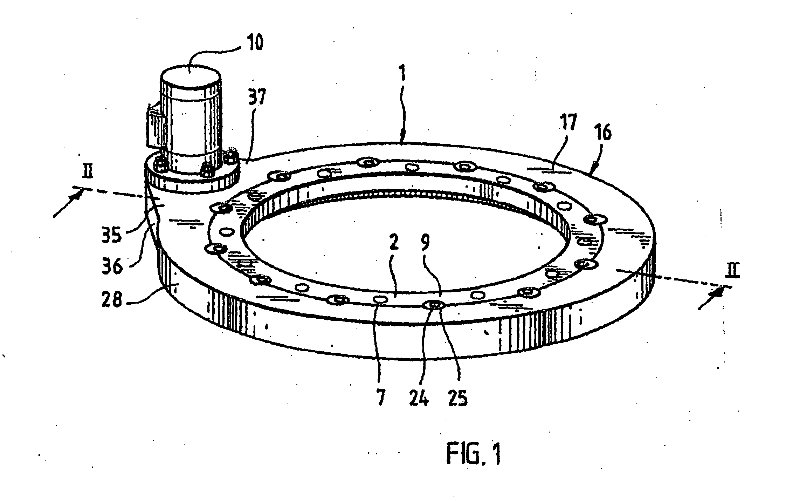

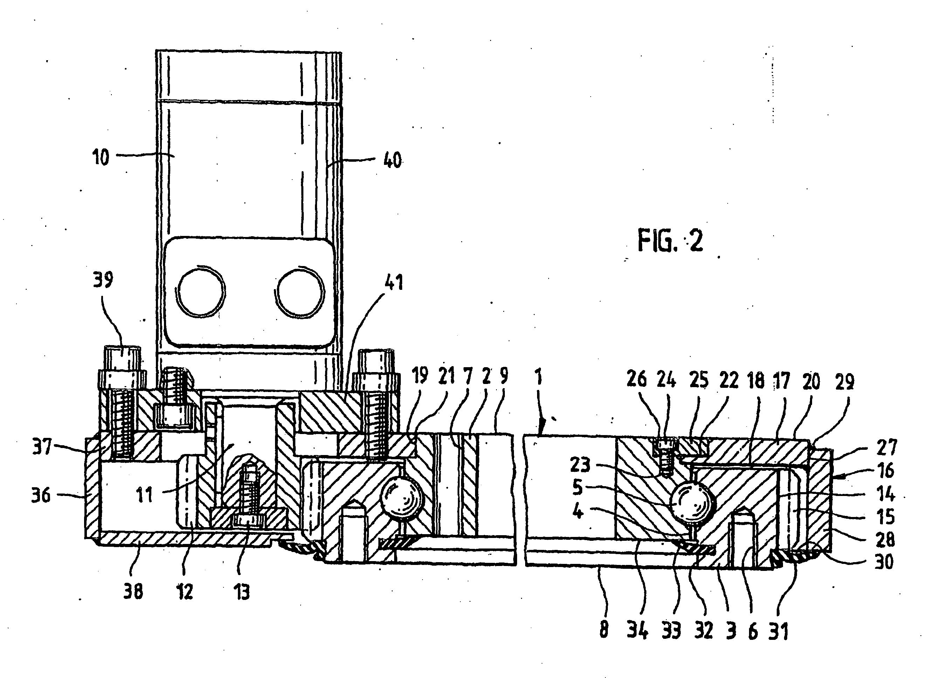

Die Drehverbindung 1 nach den Figuren 1 und 2 hat den Vorteil einer besonders niedrigen Bauhöhe im Bereich der beiden koaxial ineinander angeordneten Anschlußelemente 2, 3. Wie Fig. 2 erkennen lässt, haben die beiden Anschlußelemente 2, 3 die Gestalt von Kreisringen etwa rechteckigen Querschnittes, wobei der Außendurchmesser des inneren Anschlußelements 2 geringfügig kleiner ist als der Innendurchmesser des äußeren Anschlußelements 3, so dass im Bereich dieser Fügestelle 4 mit einem einreihigen Kugellager 5 eine leichtgängige Relativdrehbarkeit zwischen den beiden Anschlußelementen 2, 3 sichergestellt werden kann, während gleichzeitig Axial- und Radialkräfte und Kippmomente aufgefangen werden.

An der in Fig. 2 unteren Seite 8 des äußeren Anschlußelements 3 sind eine Vielzahl von zu der Drehachse parallele Gewinde-Sacklochbohrungen 6 zum Festschrauben an einem Maschinenteil um die Drehachse kranzförmig verteilt angeordnet. Andererseits weist das innenliegende Anschlußelement 2 eine Reihe von ebenfalls kranzförmig um die Drehachse verteilt angeordneten Durchgangsbohrungen 7 zur Aufnahme von Befestigungsschrauben für ein zweites, gegenüber dem ersten relativ zu verdrehendes Maschinenteil auf. Damit bei der Relatiwerdrehung beider Maschinenteile das an dem jeweils anderen Teil festgeschraubte Anschlußelement 2, 3 nicht entlangstreift, sind beide Anschlußelemente 2, 3 in axialer Richtung derart gegeneinanderversetzt, dass die jeweiligen Anschlußflächen 8, 9 gegenüberdemjeweils anderen Anschlußelement3,2 nach außen, d. h. oben oder unten verschoben sind.

Zum Drehantrieb des äußeren Anschlußelements 3 gegenüber dem inneren Anschlußelement 2 ist radial außerhalb der beiden Anschlußelemente 2,3 ein Antriebsmotor 10 mit zu der Drehachse der Drehverbindung 1 parallelerabtriebswelle 11 vorgesehen, auf der ein Ritzel 12 festgelegt, bspw. festgeschraubt 13 ist. Das Ritzel 12 kämmt mit einer den Außenumfang 14 des äußerenAnschlußelements 3 umgebenden Verzahnung 15 und versetzt dadurch das äußere Anschlußelement 3 in Drehung, da der Antriebsmotor 10 gehäuseseitig mitdem innenliegenden Anschlußelement 2 gekoppelt ist.

Zum Schutz der Verzahnung 15 des äußeren Anschlußelements 3 ist diese von einem Gehäuse 16 umgeben, welches mit dem unverzahnten Anschlußelement 2 verbunden ist. Zu diesem Zweck ist im Rahmen des Gehäuses 16 ein erstes Gehäuseteil 17 vorgesehen, welches eine kreisringförmige Gestalt aufweist mit einer radialen Breite, die etwas größer ist als die radiale Breite des äußeren Anschlußelements 3 samt dessen äußerer Verzahnung 15. Die Stärke dieser Kreisringscheibe 17 ist etwas geringer als der axiale Versatz der Anschlußfläche 9 des inneren Anschlußelements 2 gegenüber der betreffenden Stirnseite 18 des verzahnten Anschlußelements 3.

Die äußere Begrenzungskante der Anschlußfläche 9 des unverzahnten Anschlußelements 2 ist mit einer rechtwinkligen Einkehlung 19 versehen, deren axiale Erstreckung gleich der Stärke des kreisringförmigen Gehäuseteils 17 ist, während ihre radiale Erstreckung derart bemessen ist, dass derdarin gemessene Außenumfang des unverzahnten Anschlußelements 2 weitgehend identisch oder minimal kleiner als der Innendurchmesserdes kreisringförmigen Gehäuseteils 17 ist. Dadurch ist es möglich, dieses Gehäuseteil 17 zwecks Zentrierung in die Einkehlung 19 einzulegen, wobei die Außenseite 20 des Gehäuseteils 17 mit der Anschlußfläche 9 des unverzahnten Anschlußelements 2 fluchtet oder in axialer Richtung zurückgesetzt bleibt.

Um diese Position des kreisringförmigen Gehäuseteils 17 gegenüber dem unverzahnten Anschlußelement 2 zu fixieren, sind im Bereich der Stoßfuge 21 Ober den Umfang des Anschlußelements 2 etwa äquidistant verteilt angeordnete Vertiefungen 22 vorgesehen, welche bspw eine kreisförmige Grundfläche aufweisen. Diese Vertiefungen 22 erstrecken sich je etwa zur Hälfte in dem peripheren Bereich der Anschlußfläche 9 des unverzahnten Anschlußelements 2 und in den angrenzenden Bereich der damit fluchtenden Stirnseite 20 des Gehäuseteils 17. Ferner sind innerhalb des in das Anschlußelement 2 eingearbeiteten Teils der Vertiefungen 22 zu der Drehachse parallele Gewinde-Sacklochbohrungen 23 vorgesehen, in welcheje eine Maschinenschraube 24 eingeschraubt werden kann.

Vor Einsetzen dieser Maschinenschrauben 24 wird Jedoch in jede Vertiefung 22 zunächst eine Metallscheibe 25 eingelegt, dessen Grundgestalt hinsichtlich Stärke und Grundfläche mit einer Vertiefung 22 übereinstimmt. In den Einlegekörpern 25 ist je eine abgestufte Durchgangsbohrung 26 vorgesehen, die sich bei entsprechender Verdrehung des Einlegekörpers 25 innerhalb der Vertiefung 22 mit der Gewinde-Sacklochbohrung 23 in eine Flucht verbringen lässt, so dass die Maschinenschraube 24 durch diese Ausnehmung hindurch in die Bohrung 23 des unverzahnten Anschlußelements 2 hineingeschraubt werden kann, bis der Kopf der Maschinenschraube 26 innerhalb des radial erweiterten Bereichs oberhalb der Abstufung In dem Einlegekörper 25 versenkt ist und mit seiner Unterseite auf die Schulter der Abstufung drückt und damit den scheibchenförmigen Einlegekörper 25 fixiert. Da dieser gleichzeitig in den vertieften 22 Bereich des Gehäuseteils 17 hineinragt, wird dieser dadurch an dem unverzahnten Anschlußelement 3 in axialer Richtung unlösbar wie auch in azimotaler Richtung unverdrehbar an dem unverzahnten Anschlußelement 2 festgelegt. Zu diesem Zweck ist es wichtig, dass die Tiefe der Vertiefung 22 kleiner ist als die Stärke des kreisringförmigen Gehäuseteils 17, jedoch größer als die Stärke des Kopfes der Maschinenschraube 24.

An der peripheren Stirnseite 27 des kreisringförmigen Gehäuseteils 17 ist ein zylindemiarrtelförmiges Gehäuseteil 28 festgeschweißt 29. Diezu der Drehachse der Drehverbindung 1 parallele Erstreckung dieses zylindermantelförmigen Gehäuseteils 28 entspricht etwa der Höhe des Verzahnungsbereichs zzgl. der Stärke des kreisringförmigen Gehäuseteils 17.

Derverbleibende Spalt 30 zwischen dem zylindermantelförmigen Gehäuseteil 28 und dem Außenumfang 14 des verzahnten Anschlußelements 3 wird durch einen Dichtungsring 31 verschlossen, der bspw. an der äußeren Mantelfläche 14 des verzahnten Anschlußelements 3 unterhalb von dessen Verzahnungsbereich 15 festgelegt ist und sich nach radial außen bis unter das zylindertnantelförmige Gehäuseteil 28 erstreckt und durch eine dem Dichtungsring 31 innewohnende Elastizität an dieses Gehäuseteil 28 gepreßtwird. In ähnlicher Form kann an dem Innenumfang 32 des verzahnten Anschlußelements 3 ein Dichtungsring 33 vorgesehen sein, der die Stoßfuge 4 unterhalb des Kugellagers 5 überdeckt und an die untere Stirnseite 34 des unverzahnten Anschlußelements 2 gepreßt wird.

Das Gehäuse 16 kann im Bereich des Motors 10 eine radiale Erweiterung 35 aufweisen, die durch eine Ausbauchung 36 des zylindermantelförmigen Gehäuseteils 28 und eine radiale Fortsetzung 37 des kreisringförmigen Gehäuseteils 17 gebildet ist und ggf. an der dem Motor 10 gegenüberliegenden Stirnseite durch eine hinsichtlich ihrer Grundfläche etwa dem Fortsetzungsteil 37 entsprechende Platte 38verschlossen werden kann. Diese Gehäuseerweiterung 35-38 umgibt das Antriebsritzel 12 und schafft gleichzeitig eine stabile Anschlußfläche 37zum Anschrauben 39 des Motorgehäuses 40. ZurVersteifung und/oder Erleichterung der Befestigung kann zwischen der Befestigungsfläche 37 und dem Motorgehäuse 40 eine weitere Metallplatte 41 vorgesehen sein.

Damit bei Bedarf auch mehrere Antriebsmotoren 10 an die Drehverbindung 1 angekoppelt werden können, lassen sich an deren Umfang mehrere Gehäuseerweiterungen 35, vorzugsweise um gleiche Drehwinkel gegeneinander versetzt, anordnen. Bei unbenutzten Gehäuseerweiterungen 35 kann die Öffnung zum Einführen des Ritzels 12 durch einen aufgeschraubten 39 Deckel verschlossen sein.

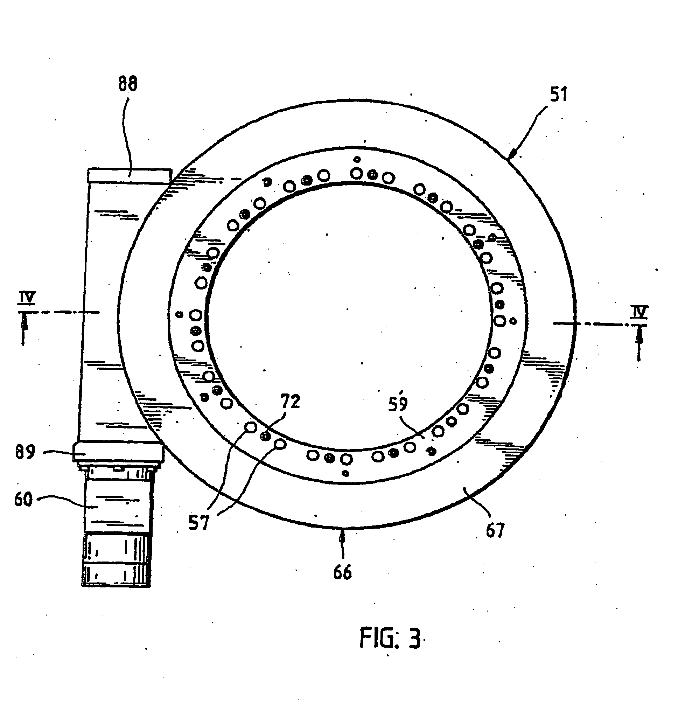

Wie Fig. 3 erkennen lässt, unterscheidet sich eine weitere Ausführungsform 51 einererfindungsgemäßen Drehverbindungvon derersteren äußerlich vor allem dadurch, dass der Antriebsmotor 60 nicht parallel zu der Drehachse, sondern tangential zu dem äußeren Anschlußelement (53) angebaut ist. An der Abtriebswelle (61) des Antriebsmotors 60 ist anstelle eines Ritzels eine Schnecke (62) angeordnet ist, die mit der am äußeren Umfang (64) des radial außenliegenden Anschlußelements (53) angeordneten Verzahnung (65) kämmt.

Der grundsätzliche Aufbau der Drehverbindung 51 ist ziemlich ähnlich zu der Drehverbindung 1 aus den Figuren 1 und 2: Die beiden Anschlußelemente (52, 53) sind koaxial zueinander angeordnet und jeweils um ein geringes Maß in Richtung ihrer Anschlußflächen (58), 59 gegenüber dem jeweils anderen Element (52, 53) nach außen versetzt. An der Fügestelle (54) befindetsich auch bei dieser Ausführungsform 51 ein einreihiges Kugellager (55).

Zur Befestigung eines verdrehbaren Anlagenteiles sind in der Anschlußfläche (58) des verzahnten Anschlußelements (53) zur Drehachse parallele Gewinde-Sacklochbohrungen (56) vorgesehen, während die entsprechenden Anschlußbohrungen 57 in der Anschlußfläche 59 des inneren Anschlußelements (52) als Durchgangsbohrungen ausgeführt sind. Auch bei dieser Ausführungsform befinden sich demnach die Befestigungsbohrungen (56) des verzahnten Anschlußelements (53) zwischen dessen Verzahnung (65) und dem Kugellager (55), um eine Anordnung mit minimalen Abmessungen zu erhalten.

Ferner ist auch bei dieser Ausführungsform ein aus zwei Teilen 67, (68) aufgebautes Gehäuse 66 vorgesehen. Ein kreisringförmiges Gehäuseteil 67 hat eine radiale Breitenerstreckung, welche etwas größer ist als die Differenz zwischen dem Außenradius der Verzahnung (65) und dem Innenradius des unverzahnten Anschlußelement (52). In einem Abstand von der Drehachse, welcher dem Außenumfang des unverzahnten Anschlußelements (52) entspricht, befindet sich in der Unterseite (69) des kreisringförmigen Gehäuseteils 67 eine Abstufung derart, dass vom Zentrum des Kreisrings 67 her gesehen sich eine Einkehlung (70) ergibt, in welche die Außenkante der Anschlußfläche 59 des unverzahnten Anschlußelements (52) zentrierend eingreifen kann. Um das kreisringförmige Gehäuseteil 67 vollständig an dem unverzahnten Anschlußelement (52) festzulegen, befinden sich etwa zwischen den Durchgangsbohrungen 57 desAnschlußelements (52) Gewindebohrungen (71), mit denen entsprechende Bohrungen 72 in dem kreisringförmigen Gehäuseteil 67 bei geeigneter Verdrehung desselben fluchten. Die Bohrungen 72 dieses Gehäuseteils 67 haben kein Innengewinde und verfügen statt dessen über eine querschnittliche Erweiterung im Bereich der Außenseite (73) dieses Gehäuseteils 67, worin der Kopf einer Befestigungsschraube (74) Platz finden kann.

Sowohl die Durchgangsbohrungen 57 des unverzahnten Anschlußelements (52) wie auch darin angeordnete Schmierkanäle (75) für das Kugellager (55) setzen sich in dem Gehäuseteil 67 bis zu dessen Außenseite (73) hin fort. Bei der Festlegung eines Anlagenteils an dem unverzahnten Anschlußelement (52) erfolgt die kraftschlüssige Verbindung mittels dessen Durchgangsbohrungen 57 durch- und hintergreifender Schrauben an diesem direkt. Die zwischengelegten Gehäuseringe 67, (79) haben daher keine eigenständige tragende Funktion im Sinne einer Axialkraft- und Kippmomentübertragung, sondern stützen lediglich das Drehmoment des Antriebsmotors 40 ab.

An dem Außenumfang (76) des kreisringförmigen Gehäuseteils 67 ist ein zylindermanteiförmiges Gehäuseteil (68) angeschweißt (77). Das zylindermantelförmige Gehäuseteil (68) stimmt hinsichtlich seines Auβendurchmessers mit dem Außendurchmesser des kreisringförmigen Gehäuseteils 67 überein und kann an einer in dessen Unterseite von außen (76) her eingearbeiteten Einkehlung (78) zentreirt sein. Der Innendurchmesser des zylindermantelförmigen Gehäuseteils (68) umgibt die Verzahnung (65) mit einem Abstand und reicht bis über den Verzahnungsbereich (65) der an der Anschlußfläche (58) des Anschlußelements (53) endet, herab.

Um bei dieser Ausführungsform 51 trotz der weit herabgezogenen Verzahnung (65) eine Abdichtung unterhalb dieser Verzahnung (65) zu erreichen, ist an der Anschlußfläche (58) des verzahnten Anschlußelements (53) ein Metallring (79) gleichen Durchmessers festgeschraubt (80). Zu diesem Zweck sind in dem Metallring (79) mit den Gewinde-Sacklochbohrungen des verzahnten Anschlußelements (63) fluchtende Bohrungen (81) vorgesehen, die eine unterseitige Verbreiterung zurAufnahme des Kopfes derMaschinenschrauben (80) aufweisen. Mittels eines in dem Bereich des innenumfangs des Metallrings (79) angeordneten Einkehlung (82) kann eine Zentrierung dieses Metallrings (79) an der innenliegenden Kante der Anschlußfläche (58) des verzahnten Anschlußelements (53) erreicht werden.

Der Metallring (79) ist an seinem Außenumfang im Bereich der Verzahnung (65) mit einer etwa tangential zu dem Umfang der Schnecke (62) verlaufenden Abschrägung (83) versehen, um einen Kontakt mit der Schnecke (62) zu vermeiden. Unterhalb dieses Abschrägungsbereiches (83) befindet sich ein in eine rundumlaufenden Nut (84) eingelegter Dichtring (85), der mit seinem Außenumfang gegen die Innenseite des zylindermantelförmigen Gehäuseteils (68) drückt und dadurch hiereine Abdichtung herbeiführt. Weitere Abdichtungen (86) sind zu beiden Seiten der das Kugellager (55) aufnehmenden Fügestelle (54) zwischen den beiden Anschlußelementen (52, 53) vorgesehen.

Im Bereich er Schnecke (62) ist das Gehäuseteil (68) unterbrochen, und die durch den Verzahnungseingriff zwischen Schnecke (62) und Zahnkranz (65) bedingte Lücke wird durch ein etwa zylindrisches Gehäuseteil (87) geschlossen, das die Schnecke (62) umgibt. Das Gehäuseteil (87) hat in dem mittleren Bereich des Verzahnungseingriffs nur eine etwa halbkreisförmige Gestalt, während an den peripheren Enden 88,89, wo die Schnecke (62) gelagert bzw. der Antriebsmotor 60 angeflanscht ist, der Querschnitt des Gehäuseteils (87) etwa einem Vollkreis entspricht. In dem Gehäuseteil (87) kann insbesondere dem Verzahnungseingriff gegenüberliegend ein Schmiermittel (88) vorgesehen sein. Zur Erhöhung des Antriebsinoments können auch mehrere, insbesonderezwei Antriebsmotoren 60 und -schnecken (62) sowie diese umgebende Gehäuseteile (87) vorgesehen sein.

## Patentansprüche

1. Vorrichtung (1; 51) zur verdrehbaren Kopplung zweier koaxialer Anschlußelemente (2, 3; 52, 53), umfassend
a) eine als ein- oder mehrreihiges Wälzlager (5; 55) ausgebildete Drehlagerung zwischen den Anschlußelementen (2, 3; 52, 53) zur Aufnahme von Axial- und Radiallasten und Kippmomenten sowie
b) einen mit beiden Anschlußelementen (2, 3; 52, 53) zu deren Relativverdrehung gekoppelten oder koppelbaren Antrieb (10; 60), dessen Chassis an einem ersten Anschlußelement (2; 52) festgelegt ist, während sein Rotor mit einem Ritzel (12) oder einer Schnecke (62) verbunden ist, welche(s) mit einer mantelseitigen Verzahnung (15; 65) des zweiten Anschlußelements (3; 53) kämmt,
c) wobei in einer Stirnseite des verzahnten Anschlußelements (3; 53) kranzförmig angeordnete Befestigungsmittel (6; 56) für die Festlegung dieses Anschlußelements (3; 53) an einem ersten Anlagenteil vorgesehen sind,
d) wobei sich die Befestigungsmittel (6; 56) zwischen der Verzahnung (15; 65) und der Drehlagerung (5; 55) befinden,
e) wobei sich die Anschlußelemente koaxial ineinander befinden und die Verzahnung (15; 56) an der Außenseite des äußeren Anschlußelements (3; 53) angeordnet ist,
f) wobei die Verzahnung (15; 65) des zweiten Anschlußelements (3; 53) von wenigstens einem Gehäuse (16; 66) umschlossen wird, welches an dem unverzahnten Anschlußelement (2; 52) festgelegt ist und das verzahnte Anschlußelement (3; 53) an der seinen Anschluß-Befestigungsmitteln (6; 56) gegenüberliegenden Stirnseite (18) umgreift,
g) und wobei das Gehäuse (16; 66) weitgehend kräftefrei ist, indem die Befestigungsmittel (7; 57) für die Festlegung des unverzahnten Anschlußelements (2; 52) an einem zweiten Anlagenteil an dem unverzahnten Anschlußelement (2; 52) selbst angeordnet sind, so dass eine unmittelbare kraftschlüssige Verbindung zwischen dem zweiten Anlagenteil und dem unverzahnten Anschlußelement durch Befestigungsmittel (7; 57) ausgebildet wird, selbst wenn sich zwischen dem zweiten Anlagenteil und dem unverzahnten Anschlußelement (2; 52) noch Gehäuseteile befinden,
wobei ferner
h) die Verzahnung (15; 65) und eine Führungsbahn für das Wälzlager (5; 55) des zweiten Anschlußelements (3; 53) durch Bearbeitung oder Formgebung desselben Anschlußelement-Grundkörpers gebildet ist; wobei
i) sich die Führungsbahn für das Wälzlager (5, 55) auf Höhe der Verzahnung (15; 65) befindet, und wobei
j) das Gehäuse (16; 66) aus zwei Teilen besteht, nämlich einem etwa kreisringförmigen Gehäuseteil (17; 67), das an dem inneren Anschlußelement (2; 52) festgelegt ist, und einem Gehäuseteil (28; 68), das sich an der peripheren Stirnseite (27) des kreisringförmigen Gehäuseteils (17; 67) anschließt und - ggf. mit Ausnahme von einer oder mehreren radialen Gehäuseerweiterungen (35) im Bereich des/der Antriebsmotors (-en) (10) - eine etwa zylindermantelförmige Gestalt aufweist, wobei das zylindermantelförmige Gehäuseteil (28; 68) und das kreisringförmige Gehäuseteil (17; 67) miteinander verbunden oder gar einstückig hergestellt sind,
k) wobei ferner das verzahnte Anschlußelement (3; 53) zwischen einer Führungsbahn des unverzahnten Anschlußelements (2; 52), den beiden Gehäuseteilen (17, 28; 67, 68) und zwei Abdichtungen, welche als elastische Dichtringe ausgebildet sind, deren Andrückkräfte sehr gering sind und daher kaum Reibungskräfte erzeugen, von drei Seiten dicht umschlossen ist,
l) und wobei Schmierfett im Bereich der Verzahnung (15; 65) durch das Gehäuse (16; 66) vor Verunreinigungen geschützt ist.

2. Vorrichtung nach Anspruch 1, **dadurch gekennzeichnet, dass** ein oder beide Anschlußelemente (2, 3) als konzentrische Ringe oder Scheiben und die Befestigungsmittel als kranzförmig angeordnete Bohrungen (6; 7) ausgebildet sind, wobei
a) das zylindermantelförmige Gehäuseteil die gesamte Verzahnung abdeckt, so dass nur noch ein schmaler Spalt zwischen dem verzahnten Anschlußelement und dem diesem gegenüberliegenden, zylindermantelförmigen Gehäuseteil verbleibt, und
b) wobei an dem Innenumfang (32) des verzahnten Anschlußelements (3) ein Dichtungsring (33) durch Einlegen in eine rundumlaufende Nut festgelegt ist, der an die untere Stirnseite (34) des unverzahnten Anschlußelements (2) gepreßt wird.

3. Vorrichtung nach Anspruch 1, **dadurch gekennzeichnet, dass** die Wälzkörper-Führungsbahn des verzahnten Anschlußelements (53) an dessen seiner Verzahnung (65) gegenüberliegenden Mantelfläche angeordnet ist, wobei der Verzahnungsbereich (65) des verzahnten Anschlußelements (53) an einer Anschlußfläche (58) dieses Anschlußelements (53) endet.

4. Vorrichtung nach Anspruch 3, **dadurch gekennzeichnet, dass** der radiale Abstand der Befestigungsbohrungen (56) des verzahnten Anschlußelements (53) zu dem Grund der Wälzkörper-Führungsbahn des verzahnten Anschlußelements (53) etwa dem radialen Abstand dieser Bohrungen (56) von dem Grund der Verzahnung (65) entspricht, wobei ein Dichtring (85), der mit seinem Außenumfang eine Abdichtung gegenüber dem zylindermantelförmigen Gehäuseteil (68) herbeiführt, in eine rundumlaufende Nut (84) eines an der Anschlußfläche (58) des verzahnten Anschlußelements (53) festgeschraubten Metallrings (79) gleichen Durchmessers eingelegt ist, der an seinem Außenumfang im Bereich der Verzahnung (65) mit einer etwa tangential zu dem Umfang der mit der Verzahnung (65) kämmenden Antriebsschnecke verlaufenden Abschrägung (83) versehen ist, um einen Kontakt mit der Schnecke (62) zu vermeiden.

5. Vorrichtung nach Anspruch 3, **dadurch gekennzeichnet, dass** die Befestigungsbohrungen (6; 56) in dem verzahnten Anschlußelement (53) mit einem Innengewinde versehen sind, wobei ein Dichtring (85), der mit seinem Außenumfang eine Abdichtung gegenüber dem zylindermantelförmigen Gehäuseteil (68) herbeiführt, in eine rundumlaufende Nut (84) eines an der Anschlußfläche (58) des verzahnten Anschlußelements (53) festgeschraubten Metallrings (79) gleichen Durchmessers eingelegt ist.

6. Vorrichtung nach einem der Ansprüche 1 oder 2, **dadurch gekennzeichnet, dass** die Befestigungsbohrungen (6) des verzahnten Anschlußelements (3) als ausschüeßlich zu dessen Anschluß-Stirnseite hin offene Sacklochbohrungen ausgebildet sind, deren Tiefe zwischen dem ½-fachen und dem ¾-fachen der Bauhöhe des verzahnten Anschlußelements (3) liegt, wobei das zylindermantelförmige Gehäuseteil (26) an dem etwa kreisringförmigen Gehäuseteil (17) angeschweißt, angeklebt oder angeschraubt ist.

7. Vorrichtung nach Anspruch 6, **dadurch gekennzeichnet, dass** der Boden der Befestigungsbohrungen (6) des verzahnten Anschlußelements (3) sich etwa auf Höhe der stärksten Einwölbung bzw. Verjüngung des verzahnten Anschlußelements (3) infolge der eingearbeiteten Führungsbahn für das Wälzlager (5) befindet, wobei das zylindermantelförmige Gehäuseteil (28) an der peripheren Stirnseite (27) des kreisringförmigen Gehäuseteils (17) festgeschweißt ist.

8. Vorrichtung nach einem der Ansprüche 1, 2, 6 oder 7, **dadurch gekennzeichnet, dass** das an dem unverzahnten Anschlußelement (2) festgelegte Gehäuseteil (16) sich in Form eines Kreisrings (17) entlang einer Stirnseite (18) des verzahnten Anschlußelements (3) parallel zu diesem erstreckt, wobei zum Drehantrieb des äußeren Anschlußelements. (3) gegenüber dem inneren Anschlußelement (2) mit der den Außenumfang (14) des äußeren Anschlußelements (3) umgebenden Verzahnung (15) das Ritzel (12) kämmt, das auf einer zu der Drehachse der Vorrichtung (1) parallelen Abtriebswelle (11) des radial außerhalb der beiden Anschlußelemente (2, 3) angeordneten Antriebsmotors (10) festgelegt ist.

9. Vorrichtung nach einem der Ansprüche 1, 2, 6, 7 oder 8, **dadurch gekennzeichnet, dass** der verbleibende Spalt (30) zwischen dem Gehäuseteil (28) und dem Außenumfang (14) des verzahnten Anschlußelements (3) einerseits und der Spalt (4) unterhalb des Kugellagers (5) andererseits durch jeweils einen Dichtungsring (31, 33) verschlossen wird, wobei die Dichtungsringe (31,33) an einander gegenüberliegenden Umfangsflächen (14, 32) des verzahnten Anschlußelements (3) festgelegt sind und durch die ihnen innewohnende Elastizität an die Unterseite des Gehäuseteils (28) einerseits und an die untere Stirnseite (34) des unverzahnten Anschlußelements (2) andererseits gepreßt werden.

10. Vorrichtung nach einem der Ansprüche 1, 3, 4 oder 5, **gekennzeichnet durch** Schmierfett, das **durch** das Gehäuse vor Verunreinigungen geschützt ist, wobei zu beiden Seiten einer ein Kugellager (55) aufnehmenden Fügestelle (54) zwischen den beiden Anschlußelementen (52, 53) Abdichtungen vorgesehen sind.

## Claims

1. Device (1; 51) for rotatably coupling two coaxial connecting elements (2, 3; 52, 53), comprising
a) a rotating mounting, which is formed as a single- or multi-row rolling contact bearing (5; 55), between the connecting elements (2, 3; 52, 53) for taking up axial and radial loads and tilting moments, as well as
b) a drive (10; 60), which is coupled or can be coupled to both connecting elements (2, 3; 52, 53) for the relative rotation thereof and the chassis of which is fixed to a first connecting element (2; 52), while its rotor is connected to a pinion (12) or a worm (62), which meshes with a tooth system (15; 65) at the cylindrical surface of the second connecting element (3; 53),
c) wherein fastening means (6; 56), which are disposed in an end side of the toothed connecting element (3; 53) in coronal fashion, are provided to fix this connecting element (3; 53) to a first unit part,
d) wherein the fastening means (6; 56) are located between the tooth system (15; 65) and the rotating mounting (5; 55),
e) the connecting elements are located coaxially one inside the other and the tooth system (15; 65) is disposed on the outside of the outer connecting element (3; 53),
f) wherein the tooth system (15; 65) of the second connecting element (3; 53) is enclosed by at least one housing (16; 66), which is fixed to the non-toothed connecting element (2; 52) and embraces the toothed connecting element (3; 53) at the end side (18) lying opposite its connection fastening means (6; 56),
g) and wherein the housing (16; 66) is substantially free of forces, because the fastening means (7; 57) for fastening the non-toothed connecting element (2; 52) to a second unit part are disposed at the non-toothed connecting element (2; 52) itself, so that a direct, non-positive connection between the second unit part and the non-toothed connecting element is formed through fastening means (7; 57), even if housing parts are still located between the second unit part and the non-toothed connecting element (2; 52),
whereby furthermore
h) the tooth system (15; 65) and a guideway for the rolling contact bearing (5; 55) of the second connecting element (3; 53) is formed by machining or shaping the same connecting element base body; wherein
i) the guideway for the rolling contact bearing (5, 55) is located at the level of the tooth system (15; 65); and wherein
j) the housing (16; 66) consists of two parts, namely a substantially circular housing part (17; 67), which is fixed to the inner connecting element (2; 52), as well as a housing part (28; 68) adjacent to the peripheral edge (27) of the circular housing part (17; 67) and substantially having a shape of a cylinder jacket, possibly with the exception of one or more radial housing extensions (35) in the area of the drive motor(s) (10), whereby the cylindrical housing part (28; 68) and the circular housing part (17; 67) are connected or are manufactured in one piece with one another,
k) whereby the toothed connecting element (3; 53) is tightly enclosed at three sides between the guideway of the untoothed connecting element (2; 52), both housing parts (17, 28; 67, 68) and two seals, which are formed as elastic sealing rings, whose compression forces are very slight and therefore generate scarcely any frictional forces,
l) and whereby lubricating grease in the region of the toothing (15; 65) is protected against contaminants by the housing (16; 66).

2. Device according to Claim 1, **characterised in that** one or both connecting element(s) (2, 3) is/are formed as concentric rings or discs, and the fastening means are formed as holes (6, 7) disposed in coronal fashion, whereby
a) the cylindrical housing part covers the whole toothing so that only a narrow gap still remains between the toothed connection element and the cylindrical, casing-shaped housing part, and
b) whereby, at the internal circumference (32) of the toothed connecting element (3), a sealing ring (33) is fixed by insertion in a radially running groove, which sealing ring (33) is pressed against the lower front end (34) of the untoothed connecting element (2).

3. Device according to Claim 1, **characterised in that** the rolling body guideway of the toothed connecting element (53) is disposed at the cylindrical surface thereof which lies opposite its tooth system (65), whereby the toothing region (65) of the toothed connecting element (53) terminates at the connecting surface (58) of this connecting element (53).

4. Device according to Claim 3, **characterised in that** the radial spacing of the fastening holes (56) of the toothed connecting element (53) from the bottom of the rolling body guideway of the toothed connecting element (53) corresponds approximately to the radial spacing of these holes (56) from the bottom of the tooth system (65), whereby a sealing ring (85) producing a seal against the cylindrical casing-shaped housing part (68) is inserted in a radially running groove (84) of a metal ring (79) of similar diameter bolted to the connecting surface (58) of the toothed connecting element (53), which ring, at its outer circumference in the region of the toothing (65), is provided with a bevelled region (83) running approximately tangentially to the circumference of a driving worm meshing with the toothing (65), for avoiding a contact with the worm (62).

5. Device according to Claim 3, **characterised in that** the fastening holes (56) in the toothed connecting element (53) are provided with an internal thread; whereby whereby a sealing ring (85) producing a seal against the cylindrical casing-shaped housing part (68) is inserted in a radially running groove (84) of a metal ring (79) of similar diameter bolted to the connecting surface (58) of the toothed connecting element (53).

6. Device according to any one of Claims 1 or 2, **characterised in that** the fastening holes (6) of the toothed connecting element (3) are formed solely as blind bores which are open towards its connection end side and the depth of which is between ½ and ¾ times the overall height of the toothed connecting element (3), whereby the cylindrical casing-shaped housing part (26) is welded, cemented or bolted to the approximately circular housing part (17).

7. Device according to Claim 6, **characterised in that** the bottom of the fastening holes (6) of the toothed connecting element (3) is located approximately at the level of the greatest vault or taper of the toothed connecting element (3) in consequence of the worked-in guideway for the rolling contact bearing (5), whereby the cylindrical casing-shaped housing part (26) is welded to the peripheral front end (27) of the circular housing part (17).

8. Device according to any one of Claims 1, 2, 6 or 7, **characterised in that** the housing part (16) which is fixed to the non-toothed connecting element (2) extends in the form of a circular ring (17) along an end side (18) of the toothed connecting element (3) parallel to the latter, whereby, for the rotary drive of the outer connecting element (3) relative to the inner connecting element (2), the pinion (12) meshes with a toothing (15) surrounding the outer circumference (14) of the outer connecting element (3), which pinion is secured to an output shaft (11) of a driving motor (10) arranged radially outside of both connecting elements (2, 3), which output shaft (11) is parallel to the axis of rotation of the device.

9. Device according to any one of Claims 1, 2, 6, 7 or 8, **characterised in that** the remaining gap (30) between the housing part (28) and the outer circumference (14) of the toothed connecting element (3) on one side and the gap (4) below the ball bearing (5) on the other are closed by a respective sealing ring (31, 33) wherein the sealing rings (31, 33) are fixed to mutually opposite circumferential surfaces (14, 32) of the toothed connecting element (3) and pressed by the elasticity which is inherent in them against the underside of the housing part (28) on one side and against the lower end side (34) of the non-toothed connecting element (2) on the other side.

10. Device according to any one of Claims 1, 3, 4 or 5, **characterised by** lubricating grease, which is protected against contaminants by the housing, whereby seals are provided on both sides of the joining site (54) accommodating the ball-bearing race (55) between both connection elements (52, 53).

## Revendications

1. Dispositif (1 ; 51) pour le couplage, avec possibilité de rotation réciproque, de deux éléments de raccordement (2, 3 ; 52, 53) coaxiaux; comprenant :
a) un système de palier de rotation, réalisé sous forme d'un palier de roulement (5 ; 55) à une ou plusieurs rangées, entre les éléments de raccordement (2, 3 ; 52, 53), pour absorber des charges axiales et radiales et des couples de basculement,
b) ainsi qu'un entraînement (10 ; 60) couplé ou pouvant être couplé aux deux éléments de raccordement (2, 3 ; 52, 53) pour leur rotation réciproque relative, et dont le châssis est fixe à un premier élément de raccordement (2 ; 52), tandis que son rotor est relié à un pignon (12) ou à une vis sans fin (62), lequel ou laquelle engrène avec une denture (15 ; 65), côté périphérie, 15 du second élément de raccordement (3 ; 53),
c) des moyens de fixation (6 ; 56) agencés sous forme d'une couronne dans une face frontale de l'élément de raccordement denté (3 ; 53) étant prévus pour la fixation de cet élément de raccordement (3 ; 53) à une première pièce de l'installation,
d) les moyens de fixation (6 ; 56) se trouvant entre la denture (15 ; 65) et le système de palier de rotation (5 ; 55),
e) les éléments de raccordement se trouvant coaxialement l'un dans l'autre et la denture (15 ; 65) étant disposée sur le côté extérieur de l'élément de raccordement extérieur (3 ; 53),
f) la denture (15 ; 65) du second élément de raccordement (3 ; 53) étant entourée par au moins un carter (16 ; 66), qui est fixe à l'élément de raccordement non denté (2 ; 52) et entoure l'élément de raccordement denté (3 ; 53) sur sa face frontale (18) opposée à ses moyens de fixation de raccordement (6 ; 56),
g) et le carter (16 ; 66) est largement soustrait à l'action de forces, en disposant les moyens de fixation (7 ; 57), pour fixer l'élément de raccordement non denté (2 ; 52), à une seconde pièce de l'installation sur l'élément de raccordement non denté (2 ; 52) lui-même, de sorte qu'est réalisée une liaison directe par adhérence entre la seconde pièce de l'installation et l'élément de raccordement non denté par des moyens de fixation (7 ; 57), même lorsqu'entre la seconde pièce de l'installation et l'élément de raccordement non denté (2 ; 52) se trouvent encore des pièces de carter,
où, en outre
h) la denture (15; 65) et une glissière de guidage pour le palier à roulement (5 ; 55) du second élément de raccordement (3 ; 53) sont réalisés par usinage ou formage du même corps de base d'élément de raccordement,
i) la glissière de guidage pour le palier à roulement (5; 55) se trouvant à hauteur de la denture (15 ; 65)
j) et le carter (16 ; 66) comprend deux parties, à savoir une partie de carter de forme approximativement annulaire (17 ; 67) qui est fixée à l'intérieur de l'élément de raccordement (2 ; 52), et une partie de carter (28 ; 68) qui est raccordée à la face frontale périphérique (27) de la partie de carter de forme annulaire (17 ; 67), de façon à présenter, à l'exception d'une ou plusieurs saillies radiales (35) au voisinage du ou des moteurs d'entraînement (10), une configuration approximativement en corps de cylindre, où la partie de carter en forme de corps de cylindre (28 ; 68) et la partie de carter de forme annulaire (17 ; 67) sont reliées entre elles ou voire réalisées en une pièce,
k) l'élément de raccordement denté (3 ; 53) entre la glissière de guidage de l'élément de raccordement non denté (2 ; 52), les deux parties de carter (17, 28 ; 67, 68) et les deux étanchéités qui sont réalisées sous forme de bagues d'étanchéité élastiques, dont les forces de pression sont très faibles et qui, par conséquent, n'engendrent pratiquement pas de force de frottement, est entouré de manière étanche sur trois côtés,
I) et où une graisse lubrifiante dans la zone de la denture (15 ; 65) est protégée contre tout encrassement par le carter (16 ; 66).

2. Dispositif selon la revendication 1, **caractérisé en ce que** l'un des éléments de raccordement (2, 3) ou les deux sont réalisés sous forme d'anneaux ou disques concentriques, et les moyens de fixation sous forme de perçage (6, 7) disposés en couronne, où
a) la partie de carter en forme de corps de cylindre recouvre l'ensemble de la denture de façon à ce que reste seulement un interstice étroit entre l'élément de raccordement denté et la partie de carter en forme de corps de cylindre opposée à ce dernier, et
b) où une bague d'étanchéité (33) est fixée sur la surface périphérique intérieure (32) de l'élément de raccordement denté (3) par insertion dans une rainure faisant le tour de la circonférence, qui est pressée contre la face frontale inférieure (34) de l'élément de raccordement non denté (2).

3. Dispositif selon la revendication 1, **caractérisé en ce que** la glissière de guidage des corps de roulement de l'élément de raccordement denté (53) est disposé sur la surface périphérique de ce dernier opposée à sa denture (65), la zone de la denture (65) de l'élément de raccordement denté (53) se terminant sur la surface de raccordement (58) de cet élément de raccordement (53).

4. Dispositif selon la revendication 3, **caractérisé en ce que** la distance radiale des perçages de fixation (56) de l'élément de raccordement denté (53) par rapport au fond de la glissière de guidage des corps de roulement de l'élément de raccordement denté (53) correspond approximativement à la distance radiale de ces perçages (56) par rapport au fond de la denture (65), où une bague d'étanchéité (85) qui, avec sa surface extérieure, entraîne une étanchéité par rapport à la partie de carter en forme de corps de cylindre (68), est insérée dans une rainure (84) faisant le tour de la circonférence d'une bague métallique (79) de diamètre identique vissée sur la surface de raccordement (58) de l'élément de raccordement denté (53), qui comporte sur sa surface extérieure dans la zone de la denture (65) un biseau (83) s'étendant approximativement tangentiellement par rapport à la périphérie d'une vis sans fin d'entraînement s'engrenant dans la denture (65), afin d'éviter tout contact avec la vis sans fin (62).

5. Dispositif selon la revendication 3, **caractérisé en ce que** les perçages de fixation (56) sont pourvus d'un filetage intérieur dans l'élément de raccordement denté (53), où une bague d'étanchéité (85) qui, avec sa surface extérieure, entraîne une étanchéité par rapport à la partie de carter en forme de corps de cylindre (68), est insérée dans une rainure (84) faisant le tour de la circonférence d'une bague métallique (79) de diamètre identique vissée sur la surface de raccordement (58) de l'élément de raccordement denté (53).

6. Dispositif selon l'une des revendications 1 ou 2, **caractérisé en ce que** les perçages de fixation (6) de l'élément de raccordement denté (3) sont réalisés sous la forme de perçages en trous borgnes uniquement ouverts en direction de la face frontale de raccordement dudit élément de raccordement, et dont la profondeur se situe entre ½ et ¾ de l'encombrement en hauteur de l'élément de raccordement denté (3), la partie de carter en forme de corps de cylindre (26) étant soudée, collée ou vissée sur la partie de carter de forme approximativement annulaire (17).

7. Dispositif selon la revendication 6, **caractérisé en ce que** le fond des perçages de fixation (6) de l'élément de raccordement denté (3) se trouve approximativement à hauteur du plus fort creusement ou rétrécissement de l'élément de raccordement denté (3), provenant de la glissière de guidage incorporée pour le palier à roulement (5), la partie de carter en forme de corps de cylindre (28) étant soudée à demeure sur la face frontale périphérique (27) de la partie de carter de forme annulaire (17).

8. Dispositif selon l'une des revendications 1, 2, 6 ou 7, **caractérisé en ce que** la partie de carter (16) fixée à l'élément de raccordement non denté (2) s'étend sous la forme d'un anneau circulaire (17), le long d'une face frontale (18) de l'élément de raccordement denté (3), parallèlement à celui-ci où, pour l'entraînement rotatif de l'élément de raccordement extérieur (3) par rapport à l'élément de raccordement intérieur (2), le pignon (12), qui est fixé sur un arbre de sortie (11) parallèle à l'axe rotatif du dispositif (1) du moteur d'entraînement (10) disposé radialement à l'extérieur des deux éléments de raccordement (2, 3), s'engrène avec la denture (15) entourant la périphérie extérieure (14) de l'élément de raccordement extérieur (3).

9. Dispositif selon l'une des revendications 1, 2, 6, 7 ou 8, **caractérisé en ce que** l'interstice (30) restant entre la partie de carter (28) et la périphérie extérieure (14) de l'élément de raccordement denté (3), d'une part, et l'interstice (4) en dessous du roulement a billes (5), d'autre part, sont fermés respectivement par une bague d'étanchéité (31, 33), les bagues d'étanchéité (31, 33) étant fixées sur des surfaces périphériques (14, 32) mutuellement opposées de l'élément de raccordement denté (3) et étant pressées, par leur élasticité inhérente, contre la face inférieure de la partie de carter (28), d'une part, et contre la face frontale inférieure (34) de
l'élément de raccordement non denté (2), d'autre part.

10. Dispositif selon l'une des revendications 1, 3, 4 ou 5, **caractérisé par** une graisse lubrifiante qui est protégée par le carter contre tout encrassement, des étanchéités étant prévues entre les deux éléments de raccordement (52, 53) aux deux extrémités d'un point d'assemblage (54) logeant un roulement à billes (55).
